# EUROPÄISCHE PATENTANMELDUNG

(11) **EP 2 273 326 A1**
(43) Veröffentlichungstag der Anmeldung: **12.01.2011**
(21) Anmeldenummer: 09164990.5
(22) Anmeldetag: 09.07.2009
(51) Int. Cl.: G05B 13/02, G05B 19/042, G05B 19/418, B41F 33/00, G06N 3/04

(54) **Regler für eine Druckmaschine**

(71) Anmelder: WIFAG Maschinenfabrik AG, 3001 Bern (CH)
(72) Erfinder: Burri, Daniel, 3510 Konolfingen (CH); Hurni, Marcel, 3018 Bern (CH)
(74) Vertreter: Schwabe - Sandmair - Marx

(57) **Zusammenfassung**

Die Erfindung betrifft ein Verfahren zum Regeln oder Steuern einer Maschine, insbesondere einer Druckmaschine (10), mit mindestens zwei Einzelreglern (11-15) zum Regeln einer oder mehrerer Einzelfunktionen der Maschine, beispielsweise Farbregisterregler (12), Seitenregisterregler (11) oder Fanoutregler (13). Die Maschine wird mittels der mindestens zwei Einzelregler (11-15) geregelt oder gesteuert. Eine Regelung von zumindest einem ersten Einzelregler (13-15) wird durch einen übergeordneten Regler (16) beeinflusst oder zeitweise geändert, beispielsweise dadurch, dass die Regelung des zumindest einen Einzelreglers (13-15) zeitweise unterbunden oder abgeschwächt, oder der Regelalgorithmus geändert wird, um die Regelung durch einen anderen, zweiten Einzelregler (11-12) zu vereinfachen oder zu verbessern.

## Beschreibung

### Regler für eine Druckmaschine

Die Erfindung betrifft ein Verfahren und ein System zum vorzugsweise kooperativen Regeln oder Steuern einer Maschine, vorzugsweise einer Druckmaschine, wie zum Beispiel einer Rotationsdruckmaschine.

Eine moderne Druckmaschine ist mit einer Vielzahl von Reglern ausgestattet. Jeder einer Maschineneinheit der Druckmaschine zugeordnete Regler ist darauf ausgerichtet, eine möglichst gute Funktion der betreffenden Maschineneinheit zu gewährleisten. Ein Regler, welcher für das Regeln einer Maschineneinheit ausgelegt ist, kann jedoch einen anderen Regler, welcher für das Regeln einer anderen Maschineneinheit ausgelegt ist, beim Erzielen eines optimalen Regelergebnisses möglicherweise behindern, so dass dadurch die Gesamtfunktion der Maschine beeinträchtigt werden kann.

Aus der WO 2005/092613 A2 ist eine Druckmaschine mit mindestens einem mit einem Stellglied einstellbaren Maschinenelement bekannt. Eine Einstellung des mindestens einen Maschinenelementes wirkt auf eine Qualität eines von der Druckmaschine ausgeführten Druckes. Eine optische Erfassungseinrichtung mit einem auf eine Oberfläche eines in der Druckmaschine bedruckten Bedruckstoffes gerichteten Sensor erfasst die Qualität des Druckes und eine Daten von der optischen Erfassungseinrichtung empfangende Regeleinrichtung stellt mit dem Stellglied das mindestens eine Maschinenelement in Abhängigkeit einer Differenz zwischen einer als Sollwert vorgegebenen Qualität des Druckes und der als Istwert von der optischen Erfassungseinrichtung erfassten Qualität des Druckes in einer die Differenz zwischen dem Sollwert und dem Istwert minimierenden Weise ein. Der Regelung liegt zugrunde, dass die Qualität des Druckes ganzheitlich von der optischen Erfassungseinrichtung erfasst und deren Daten hinsichtlich auf die Qualität des Druckes einwirkender Störeinflüsse ausgewertet wird.

Manuelle Verstellungen, welche früher eine Bedienperson während des Druckprozesses vornehmen musste, werden heutzutage weitmöglichst von Reglersystemen übernommen. Diese sind meist nicht oder nur beschränkt miteinander vernetzt. Dies kann dazu führen, dass Regler auf Grund von Störfaktoren Verstellungen vornehmen, welche sich nicht positiv auf das Gesamtprodukt auswirken.

Aus der DE 103 03 122 A1 ist ein Verfahren zum Regeln von Bahnspannungen eines Mehrbahnsystems bekannt. Hierbei durchlaufen zunächst wenigstens zwei Bahnen jeweils zumindest eine Bearbeitungsstufe getrennt voneinander, um im Anschluss daran zu einem Bündel zusammengeführt zu werden. Mittels eines ersten Regelprozesses werden die Bahnspannungen der wenigstens zwei Bahnen zueinander eingestellt. Je zusammen zu führender Bahn wird deren Bahnspannung auf ihrem Bahnweg durch einen eigenen, vom genannten Regelprozess verschiedenen zweiten Regelprozess geregelt.

Es ist eine Aufgabe der Erfindung, das Regeln einer Maschine, welche von einer Vielzahl von Einzelreglern geregelt wird, im Hinblick auf eine Gesamtfunktion der Maschine zu verbessern.

Vorstehende Aufgabe wird durch die Gegenstände der unabhängigen Ansprüche gelöst. Die abhängigen Ansprüche sind auf vorteilhafte Weiterbildungen gerichtet.

Ein Aspekt der Erfindung betrifft ein Verfahren zum Regeln oder Steuern einer Maschine, insbesondere einer Druckmaschine. Die Maschine kann zwei oder mehrere Einzelregler umfassen, wobei die Einzelregler zum Regeln einer oder mehrerer Einzelfunktionen der Maschine ausgelegt sind. Ein Einzelregler und eine dazugehörende Einzelfunktion der Maschine können zum Beispiel ein Farbregisterregler zum Positionieren einzelner Farben in Papierlaufrichtung sein, ein Seitenregisterregler zum seitlichen Positionieren oder Schieben eines Plattenzylinders, ein Fanoutregler zum Korrigieren des beim Feuchten und Ziehen an der Bahn entstehenden Fanin-Effekts zwischen Zylindern entlang der Papierbahn, oder ein Bahnspannungsregler für einen konstanten Zug einer Papierbahn oder eines Papierstranges im Fortdruck in Abhängigkeit von der Papierbahnbreite oder von der Papierstärke.

Die Maschine kann mittels der mindestens zwei Einzelregler geregelt oder gesteuert werden. Hierbei kann die Regelung von einem oder mehreren ersten Einzelreglern durch einen übergeordneten Regler beeinflusst oder zeitweise geändert werden, um die Regelung von einem oder mehreren zweiten Einzelreglern zu verbessern.

Das Ändern der Regelung eines oder mehrerer Einzelregler kann auch zum Verbessern einer Gesamtfunktion der Maschine, beispielsweise zum Reduzieren oder Minimieren einer von der Maschine erzeugten Makulatur und/oder zum Erhöhen einer Druckqualität der Maschine und/oder zum Reduzieren einer Ausfallwahrscheinlichkeit der Maschine und/oder zum Erhöhen einer Druckleistung der Maschine ausgeführt werden.

Zeitweise Ändern einer Regelung kann heißen, dass die Regelung über eine gewisse Zeit oder Zeitdauer geändert wird und nach Ablauf dieser Zeit zurückgenommen oder zurückgestellt wird. Die Zeitdauer kann vorgegeben oder voreingestellt sein, sie kann aber auch während der Laufzeit der Maschine, unter Berücksichtigung von Maschinenparametem, ermittelt und festgelegt werden.

Beeinflussen oder Ändern einer Regelung kann darin bestehen, dass die Regelung des einen oder der mehreren ersten Einzelregler zeitweise deaktiviert oder unterbunden oder abgeschwächt, oder der Regelalgorithmus geändert wird. Die Änderung der Regelung des oder der ersten Einzelregler zielt darauf ab, eine Beeinflussung oder Behinderung der Regelung des oder der zweiten Einzelregler durch die Regelung des oder der ersten Einzelregler zu reduzieren oder abzustellen, um die Regelung des oder der zweiten Einzelregler zu verbessern, zu vereinfachen, oder effizienter zu machen und/oder um die Gesamtfunktion der Maschine, beispielsweise durch Verringerung der Makulatur, zu verbessern. Die Gesamtfunktion der Maschine kann auch als eine von der Druckmaschine aktuell produzierte und sensorisch erfasste Qualität des Druckes aufgefasst werden. Mit der Qualität des Druckes korrelierende Daten werden dem übergeordneten Regler zugeführt, der seinerseits einen erfassten Istwert mit einem vorgegebenen Sollwert abgleicht und die aktuelle Änderung mindestens einer Regelung derart neu einstellt oder nachführt, dass die aktuell produzierte Qualität des Druckes an den Sollwert herangeführt und dort möglichst gehalten wird. Das Ändern einer Regelung eines oder mehrerer ersten Einzelregler, einschließlich Beeinflussen, Abschwächen, oder Deaktivieren der Regelung, ist eine kooperative Maßnahme des übergeordneten Reglers, welche zugunsten einer Verbesserung der Regelung eines oder mehrerer zweiten Einzelregler oder der Gesamtfunktion der Maschine durchgeführt wird.

Gemäß einer Ausführungsform kann zumindest eine erste Regelgröße des zumindest einen ersten Einzelreglers von einer zweiten Regelgröße des anderen, zweiten Einzelreglers verschieden sein. Hierbei kann die zumindest eine erste Regelgröße beispielsweise eine Position von Druckfarben gegenüber der Papierbahn oder eine Ausdehnung der Papierbahn durch Peuchtigkeitsaufnahme betreffen und die zumindest eine zweite Regelgröße kann beispielsweise eine von einem Schnittlageregler erzeugte Stranglängenänderung oder eine Position von Schön- und Widerdruckseite gegenüber der Papierbahn betreffen.

Gemäß einer weiteren Ausführungsform kann eine erste Einzelfunktion der Maschine von einem ersten Einzelregler mit einer ersten Priorität, und eine zweite Einzelfunktion der Maschine von einem zweiten Einzelregler mit einer zweiten Priorität geregelt oder gesteuert werden. Hierbei kann die zweite Priorität niedriger als die erste Priorität sein.

Beim Hochfahren und/oder Herunterfahren und/oder bei einer eingetretenen oder vorherbestimmbaren Verschlechterung der Gesamtfunktion der Maschine, beispielsweise einer Verschlechterung eines Druckbildes oder einer Erhöhung einer von der Maschine erzeugten Makulatur, kann eine Regelung des ersten Einzelreglers zeitweise geändert, beispielsweise unterbunden oder abgeschwächt, werden, um die Regelung der von dem zweiten Einzelregler geregelten Regelgröße zu vereinfachen oder zu verbessern.

Gemäß einer Ausführungsform kann die Maschine mittels einer Mehrzahl von Einzelreglern, beispielsweise mindestens 5, mindestens 10, oder mindestens 30 Einzelregler gesteuert werden. Jedem Einzelregler kann eine Priorität zugeordnet werden, welche in Bezug auf eine Priorität, die einem anderen Einzelregler zugewiesen wurde, gleich oder verschieden ist. Auf diese Weise kann jeder Einzelregler der Maschine eine Priorität aufweisen, welche Teil einer Prioritätsliste sein kann. Die Prioritätsliste kann sortiert sein, beispielsweise auf- oder absteigend.

Gemäß einer Ausführungsform kann die Regelung des ersten Einzelreglers derart geändert werden, dass die Regelung des ersten Einzelreglers, dessen Priorität niedriger als die Priorität des zweiten Einzelreglers ist, zugunsten der Regelung des zweiten Einzelreglers zurückgestellt wird. Auch die Regelungen mehrerer erster Einzelregler, welche niedriger priorisiert sind als mehrere zweite Einzelregler, können zugunsten der Regelungen der zweiten Einzelregler zurückgestellt werden. Bei Verwendung einer sortierten Prioritätsliste können die ersten Einzelregler eine erste Gruppe von Einzelreglern an einem Ende der Prioritätsliste mit niedrigsten Prioritätswerten, und die zweiten Einzelregler können eine zweite Gruppe von Einzelreglern am entgegengesetzten Ende der Prioritätsliste bilden, wobei die erste und die zweite Gruppe von Einzelreglern disjunkte Mengen sind.

Einer Führungsgröße des ersten Einzelreglers kann ein Sollwertbereich anstelle eines einzelnen oder scharfen Sollwerts zugewiesen werden. Dadurch kann auf einfache Weise die Regelung des ersten Einzelreglers abgeschwächt oder gelockert werden, weil das Regelungsziel, einen Ist-Wert an einen Soll-Wert heranzuführen, dahingehend aufgeweicht werden kann, dass der Soll-Wert innerhalb des Sollwertbereich mit einer gewissen Elastizität und/oder Verzögerung an den Ist-Wert herangeführt wird, so dass die Anpassung des zu regelnden IstWerts zweitweise geringer oder gleich Null ist.

Um eine Regelung abzuschwächen, kann der Führungsgröße des ersten Einzelreglers ein fuzzy Sollwert oder ein unscharfer, das heißt fuzzy, Sollwertbereich zugewiesen werden. Demnach können den Regelgrößen semantische Werte wie "groß" oder "klein" zugewiesen werden, so dass bei einer Änderung einer Regelung lediglich die Zugehörigkeitsfunktionen der dazugehörenden Werte geändert oder angepasst werden müssen.

Um die Regelung des ersten Einzelreglers abzuschwächen, ist es möglich, dass dem ersten Einzelregler ein verzögertes Regelverhalten zugewiesen wird. Das Verzögern der Regelung des oder der ersten Einzelregler um eine Verzögerungszeit hätte zur Folge, dass der oder die ersten, höher priorisierten, Einzelregler während dieser Verzögerungszeit ohne oder mit nur geringer Einwirkung der Regelung des oder der zweiten Einzelregler geregelt werden kann. Das verzögerte Regelverhalten kann beispielsweise mittels eines Totzeitglieds und/oder eines I-Glieds erreicht werden.

Gemäß einer Ausführungsform kann geprüft werden, ob eine Verschlechterung der Gesamtfunktion der Maschine vorliegt. Die Verschlechterung kann beispielsweise eine Zunahme der Makulatur, oder eine Verschlechterung des Druckbildes, insbesondere der Registerhaltigkeit der Druckfarben, betreffen.

Falls eine Verschlechterung der Gesamtfunktion der Maschine festgestellt wird, kann die Regelung des oder der Einzelregler mit der niedrigsten Priorität über einen vorgegebenen Zeitraum von zum Beispiel zehn Sekunden oder einer Minute geändert werden. Sofern es um einen einzigen Einzelregler geht, dessen Regelung geändert werden soll, kann dafür derjenige Einzelregler ausgewählt werden, welcher die niedrigste Priorität aufweist. Falls mehrere Einzelregler einen gemeinsamen, niedrigsten Prioritätswert aufweisen, können zusätzliche Kriterien für die Bestimmung des Einzelreglers berücksichtigt werden, dessen Regelung geändert werden soll. Auf Basis dieser Kriterien werden anschließend die Prioritäten derart geändert oder angepasst, dass die Prioritäten möglichst voneinander verschieden sind, so dass der oder die Einzelregler eindeutig zum Ändern ihrer Regelungen ausgewählt werden können.

Sofern es um eine Mehrzahl von Einzelreglern geht, deren Regelung geändert werden soll, werden diese Einzelregler aus der sortierten Prioritätenliste ausgewählt, wobei die ausgewählten Einzelregler die niedrigsten Prioritäten aufweisen und somit die erste Gruppe von Einzelreglern bilden, deren Regelung beeinflusst und zum Beispiel abgeschwächt wird.

Nach Ablauf des vorgegebenen Zeitraums kann die Gesamtfunktion der Maschine zum Beispiel durch sensorisches Erfassen der Qualität des Druckes oder der Makulatur geprüft werden. Falls eine Verbesserung der Gesamtfunktion der Maschine nicht festgestellt wird, wird mindestens ein weiterer Einzelregler mit nächsthöherer Priorität über einen vorgegebenen Zeitraum zusätzlich zu dem Einzelregler oder zu den Einzelreglern der ersten Gruppe von Einzelreglern, deren Regelung geändert wurde, geändert, beispielsweise unterbunden oder abgeschwächt, wobei die erste Gruppe von Einzelreglern um den oder die Einzelregler mit nächsthöherer Priorität erweitert wird, und die Gesamtfunktion der Maschine wird erneut geprüft. Diese Vorgänge werden im Rahmen eines Wiederholungszyklus wiederholt ausgeführt, bis entweder eine Verbesserung der Gesamtfunktion der Maschine oder eine, insbesondere durch die Zahl der Einzelregler bestimmte, maximale Anzahl von Wiederholungen erreicht ist, welche beispielsweise als Gesamtzahl der Einzelregler minus Zahl der Einzelregler in der zweiten Gruppe ausgedrückt werden kann.

Das Ändern der Einzelregler der ersten, niedrigst priorisierten Gruppe von Einzelreglern kann gemäß einer ersten Option einen oder mehrere Einzelregler der ersten Gruppe, oder gemäß einer zweiten Option alle Einzelregler der ersten Gruppe betreffen. Gemäß der ersten Option wird bei jeder Wiederholung eine in dem Wiederholungszyklus nicht aufgetretene, oder für den Wiederholungszyklus einzigartige, Kombination von ausgewählten und nicht ausgewählten Einzelreglern verwendet. Durch Umsetzen der möglichen Kombinationen von ausgewählten und nicht ausgewählten Einzelreglern können auch Situationen auftreten, in denen ein höher priorisierter Einzelregler zugunsten eines niedriger priorisierten Einzelreglers zurückgestellt wird, wodurch die Prioritäten der Einzelregler im Verlauf des Maschinenbetriebs, also dynamisch, geändert oder angepasst werden können. Die Änderung oder Anpassung der Prioritäten kann adaptiv, das heißt mittels Lernen während des Maschinenbetriebs, und/oder nach statistischen Verfahren durchgeführt werden. Ein solches statistisches Verfahren könnte darin bestehen, dass a) jedem Einzelregler ein Register zugeordnet wird, b) das Register eines Einzelreglers vor jedem Wiederholzyklus auf einen Initialwert von Null gesetzt wird, c) nach Abschluss des Wiederholzyklus das Register eines Einzelreglers auf Eins gesetzt wird, falls die Regelung des betreffenden Einzelreglers geändert wurde, und c) nach Abschluss des Wiederholzyklus jedem Einzelregler eine neue Priorität, gebildet aus einer gewichteten Summe der bisherigen Priorität und dem Wert des Registers, zugeordnet wird.

Gemäß einer weiteren Ausführungsform kann eine Priorität einem Einzelregler statisch zugeordnet werden. Hierbei kann beispielsweise die Prioritätsliste durch Bedienpersonen der Maschine erstellt werden und vor Inbetriebnahme oder während des Maschinenbetriebs dem übergeordneten Regler zur Verfügung gestellt werden.

In einer vorteilhaften Ausführungsform kann eine Priorität einem Einzelregler dynamisch zugeordnet werden. Hierbei kann die Prioritätsliste während des Maschinenbetriebs erstellt und/oder geändert werden, indem sie, wie oben dargestellt, auf Basis eines selbstlernenden Algorithmus zugeordnet und/oder geändert werden.

Vorteilhafterweise kann ein Einzelregler mit höherer Priorität, insbesondere beim Hochfahren der Maschine, vor einem Einzelregler mit niedrigerer Priorität aktiviert werden. Ein Einzelregler mit niedrigerer Priorität kann, insbesondere beim Herunterfahren der Maschine, vor einem Einzelregler mit höherer Priorität deaktiviert werden.

Gemäß einer weiteren Ausführungsform kann die Regelung eines Schnittlagereglers oder eines Bahnspannungsreglers beeinflusst oder zeitweise geändert, beispielsweise unterbunden oder abgeschwächt, werden, um die Regelung eines Farbregisterreglers oder Seitenregisterreglers zu vereinfachen oder zu verbessern. Hierbei weisen der Farbregisterregler und der Seitenregisterregler höhere Prioritäten als der Schnittlageregler und der Bahnspannungsregler auf.

Gemäß einer Ausführungsform kann beispielsweise einem Bahnspannungsregler eine niedrigere Priorität als einem Seitenregisterregler zugewiesen werden, insbesondere beim Hochfahren der Maschine. Eine Bahnspannung kann reduziert oder eine Regelung der Bahnspannung kann deaktiviert werden, indem eine Änderung des Zugs auf eine Papierbahn oder einen Papierstrang durch den Bahnspannungsregler unterbunden wird, falls ein Seitenregistersensor des Seitenregisterreglers eine Position eines Plattenzylinders relativ zur Bahn außerhalb eines vorgegebenen Wertebereichs misst, und die Regelung der Bahnspannung kann durch den Bahnspannungsregler aktiviert werden, falls die Position des Plattenzylinders relativ zur Bahn einen Wert innerhalb des vorgegebenen Wertebereichs aufweist.

Einem Bahnspannungsregler kann beispielsweise, insbesondere beim Hochfahren der Maschine, eine niedrigere Priorität als einem Seitenregisterregler zugewiesen werden. Folglich kann eine Bahnspannung reduziert oder eine Regelung der Bahnspannung deaktiviert werden, beispielsweise mittels Unterbinden einer Änderung des Zugs auf eine Papierbahn oder einen Papierstrang durch den Bahnspannungsregler, falls ein Seitenregistersensor des Seitenregisterreglers eine Position eines Plattenzylinders relativ zur Bahn außerhalb eines vorgegebenen Wertebereichs misst. Dieser Wertebereich kann durch Werte definiert sein, die während des Maschinenbetriebs unverändert sind oder durch Werte, die während des Maschinenbetriebs errechnet werden und sich kontinuierlich an die Betriebsparameter der Maschine anpassen. Die Regelung der Bahnspannung kann durch den Bahnspannungsregler aktiviert werden, falls die Position des Plattenzylinders relativ zur Bahn einen Wert innerhalb des vorgegebenen Wertebereichs aufweist.

Gemäß einer weiteren Ausführungsform kann einem Rollenpositionierregler eine niedrigere Priorität als einem Fanoutregler zugewiesen werden. Folglich kann eine Rollenpositionierung durch den Rollenpositionierregler unterbunden werden, falls ein Fanoutsensor des Fanoutreglers einen Fanout außerhalb eines vorgegebenen Wertebereichs misst. Dieser Wertebereich kann durch Werte definiert sein, die während des Maschinenbetriebs unverändert sind oder durch Werte, die während des Maschinenbetriebs errechnet werden und sich kontinuierlich an die Betriebsparameter der Maschine anpassen. Die Regelung der Rollenpositionierung durch den kann durch den Rollenpositionierregler aktiviert oder durchgeführt werden, falls der Fanout einen Wert innerhalb des vorgegebenen Wertebereichs aufweist.

Gemäß einer Ausführungsform kann einem Bahnspannungsregler eine niedrigere Priorität als einem Schnittlageregler zugewiesen werden. Folglich kann eine Bahnspannung reduziert oder eine Regelung der Bahnspannung deaktiviert werden, beispielsweise mittels Unterbinden einer Änderung des Zugs auf eine Papierbahn oder einen Papierstrang durch den Bahnspannungsregler, falls ein Schnittlagereglersensor eine Abweichung einer Ist-Druckbildplatzierung von einer Soll- Druckbildplatzierung außerhalb eines vorgegebenen Wertebereichs misst. Dieser Wertebereich kann durch Werte definiert sein, die während des Maschinenbetriebs unverändert sind oder durch Werte, die während des Maschinenbetriebs errechnet werden und sich kontinuierlich an die Betriebsparameter der Maschine anpassen. Die Regelung der Bahnspannung kann durch den Bahnspannungsregler aktiviert werden, falls die Abweichung der Ist-Druckbildplatzierung von der Soll- Druckbildplatzierung einen Wert innerhalb des zulässigen Wertebereichs aufweist.

Gemäß einer weiteren Ausführungsform kann einem Schön-/Widerdruckregler eine niedrigere Priorität als einem Farbregisterregler zugewiesen werden. Folglich kann eine Positionierung von Druckbildern der Schön- und Widerdruckseite zueinander durch den Schön-/Widerdruckregler unterbunden werden, falls ein Sensor des Farbregisterreglers, beispielsweise eine Farbregisterkamera, Positionen einzelner Farben relativ zueinander oder zur Bahn außerhalb eines vorgegebenen Wertebereichs misst. Dieser Wertebereich kann durch Werte definiert sein, die während des Maschinenbetriebs unverändert sind oder durch Werte, die während des Maschinenbetriebs errechnet werden und sich kontinuierlich an die Betriebsparameter der Maschine anpassen. Die Positionierung von Druckbildern der Schön- und Widerdruckseite zueinander kann durch den Schön-/Widerdruckregler durchgeführt werden, falls die Positionen der einzelnen Farben relativ zueinander oder zur Bahn Werte innerhalb des zulässigen Wertebereichs aufweisen.

Gemäß einer Ausführungsform kann der übergeordnete Regler an jeweils einen Einzelregler, als Ausgangsgrößen des übergeordneten Reglers, mindestens eine Regelgröße und/oder mindestens eine Führungsgröße zuführen. Jeweils ein Einzelregler kann mindestens eine Stellgröße an mindestens ein dazugehörendes Stellglied und/oder an den übergeordneten Regler, als Eingangsgröße des übergeordneten Reglers, zuführen. Der übergeordnete Regler kann ein neuronales Netz umfassen, mittels welchem die Eingangsgrößen und Ausgangsgrößen des übergeordneten Reglers zum Regeln und/oder Verbessern einer Gesamtfunktion der Maschine übertragen werden. Das neuronale Netz kann ein voll verknüpftes Netz umfassen, mittels welchem die Eingangsgrößen und Ausgangsgrößen des übergeordneten Reglers durch lineare und/oder nichtlineare Übertragungsfunktionen mit adaptiven und/oder fest eingestellten Parametern zum Regeln und/oder Verbessern einer Gesamtfunktion der Maschine übertragen werden. Das voll verknüpfte Netz kann auch mindestens eine fehlende Verknüpfung aufweisen.

Ein weiterer Aspekt der Erfindung betrifft ein System zum Regeln oder Steuern einer Maschine, insbesondere Druckmaschine. Das System umfasst mindestens zwei jeweils zum Regeln einer oder mehrerer Einzelfunktionen der Maschine ausgebildeten Einzelreglern, und einen mit den Einzelreglern, vorzugsweise mittelbar oder unmittelbar, gekoppelten, zum Regeln der Maschine ausgebildeten übergeordneten Regler oder Gesamtregler. Hierbei ist eine Regelung von zumindest einem Einzelregler zumindest zeitweise durch den Gesamtregler änderbar.

Gemäß einer Ausführungsform kann die Regelung eines jeden Einzelreglers durch den Gesamtregler abgeschwächt oder deaktiviert werden. Die Regelung jedes Einzelreglers kann durch den Gesamtregler auch wieder aktiviert werden.

Die vorliegende Erfindung wird anhand von Ausführungsbeispielen näher erläutert. Dabei zeigt:
- Fig. 1: eine Zusammenstellung von Einzelreglern für eine kooperative Regelung,
- Fig. 2: Ablaufschritte beim Hochfahren einer Druckmaschine,
- Fig. 3: das Zusammenspiel der Einzelregler,
- Fig. 4: die Kommunikation zwischen einem Rollenpositionierregler und einem Wende- strangpositionierregler, und
- Fig. 5: ein Ausführungsbeispiel einer Priorisierung von Einzelreglern einer Druckmaschi- ne.

Im Allgemeinen sind Druckmaschinen mit einer Vielzahl von Einzelreglern, Reglersystemen und Stellgliedern ausgerüstet, welche die Druckmaschine bei ihrer Arbeit unterstützen. Im Folgenden sind einige der bekannten Regler aufgeführt. Damit die einzelnen Regler den gewünschten Effekt auf das Produkt erzielen, müssen gewisse Voraussetzungen erfüllt sein. Diese werden ebenfalls aufgezeigt.

Die Seitenkantensteuerung wird durch einen Einzelregler ausgeführt, welcher die Bahnkante unmittelbar nach dem Abwickeln von der Rolle an einer dem Einzelregler per Sollwert vorgegebenen Stelle hält. Der Bahnkantensensor (Zeilensensor) wird dazu an die per Sollwert definierte Stelle hingeführt und misst die Lage der Bahnkante. Als Stellglied wird die seitliche Verschiebung der Rolle mittels der Tragarmantriebe genutzt.

Eine Spreizvorrichtung macht aus einer Bahn reduzierter Breite zwei Stränge und legt diese mittels Spreizstangen nach außen, damit diese wiederum mittig auf nicht verstellbare Trichter geführt werden können. Die Position der Spreizstangen wird aus der Bahnbreite zu einem Sollwert umgerechnet.

Der Seitenregisterregler regelt das Seitenregister, welches den Plattenzylinder seitlich schieben kann. Der Farbregisterregler wertet sein von einer Kamera erfasstes Markenbild nicht nur für eine Passermessung in Umfangsrichtung aus, sondern auch für eine Seitenpassermessung. Ein Regler für den seitlichen Passer benützt als Stellglieder die Seitenregistermotoren der Plattenzylinder in den Druckwerken.
Stellglied: Druckzylinder (seitliche Position).
Messung: eine Farbregisterkamera/pro Turm und Bahnseite.
Voraussetzungen: Druckbild, Marken.

Der Farbregisterregler regelt die Position der einzelnen Farben in Papierlaufrichtung. Er sorgt also dafür, dass der Farbpasser stimmt. Dabei werden Rot, Gelb, Blau zu Schwarz gestellt. Die Messung wird mit einer Farbregisterkamera durchgeführt. Das Stellglied ist der Plattenzylinder.
Stellglied: Druckzylinder (rotative Position).
Messung: eine Farbregisterkamera pro Turm und Bahnseite.
Voraussetzungen: Druckbild, Marken.

Der Schön-/Widerdruckregler positioniert die Druckbilder der Schön-und Widerdruckseite in Papierlaufrichtung zueinander. Er ist also einem dem Farbrregisterregler übergeordneter Regler. Die Messung wird mit einer Farbregisterkamera durchgeführt. Das Stellglied ist der Plattenzylinder.
Stellglied: Druckzylinder (rotative Position).
Messung: eine Farbregisterkamera/pro Turm und Bahnseite.
Voraussetzungen: Druckbild, Marken.

Die Regelung der Lage der Schneidmesser in dem Wendestangenmodul wird so ausgeführt, dass die Papierbahn nach dem Druck im Wendestangenmodul von Schneidmessern in Laufrichtung in Stränge gewünschter Breite zerteilt wird. Diese Strangbreiten haben zunehmend keinen fixen Zusammenhang zu der Platteneinteilung der Druckmaschine. Die Schneidmesser sind aufgrund von Formatvariabilität verstellbar ausgeführt. Ihre Position definiert zusammen mit der Papierbreite die entstehende Strangbreite und wird durch einen Sollwert definiert und nicht geregelt. Bei nicht automatisch positionierbaren, fix montierten Schneidmessern kann deren Lage zu den Trichtern während des Abdruckens der Maschine kontrolliert werden. Die Strangbreite kann in diesem Fall nur durch die seitliche Positionierung der ablaufenden Rolle korrigiert werden.

Die Regelung der Lage der gewendeten Stränge wird so ausgeführt, dass die seitliche Lage von gewendeten Strängen durch die Position von umfahrenen Wendestangen beeinflusst werden kann. Ein Strangkantenregler kann die Kante des aus der Wendestange auslaufenden Stranges mittels Kantensensor (Zeilensensor) messen und mittels Stellglied Wendestange auf einem Sollwert halten.
Stellglied: Wendestangen im Wendemodul.
Messung: ein Zeilensoensor pro Wendestrang möglichst nahe bei der Sammelwalze.
Voraussetzungen: vernachlässigbares Verlaufen der Stränge nach der Messung.

Die Regelung der seitlichen Trichterverschiebung wird so ausgeführt, dass die Position des Trichters die Lage der entstehenden Rückenfalte des Stranges definiert. Wird ein Tabloidschnitt durchgeführt, sollte die seitliche Ausrichtung des Schneidmessers mit der Trichterposition übereinstimmen. Auf Anlagen, die mit reduzierter Bahnbreite betrieben werden können und anstelle des Spreizkonzeptes mit seitlich verschiebbaren Trichtern ausgestattet sind, definiert die Bahnbreite (oder allenfalls die Strangbreite) die Lage der Trichter. Es existiert deshalb kein Bedarf nach einer geregelten Trichterposition. Diese folgt aus der Definition des Produktes und der verwendeten Bahn- oder Strangbreiten.

Der Fanoutregler korrigiert den Fanineffekt zwischen aufeinanderfolgenden Druckstellen, welcher beim Feuchten und Ziehen an der Bahn entsteht. Stellglied ist die Fanoutwalze zwischen den aufeinanderfolgenden Druckstellen. Die Messung findet mit einer Farbregisterkamera statt.
Stellglied: Fanoutwalze.
Messung: ein Farbregisterkamera/pro Turm und Bahnseite.
Voraussetzungen: Druckbild, Marken, kein Fanout zwischen erster und zweiter Druckstelle, kein Fanout zwischen dritter und vierter Druckstelle.

Der Schnittlageregler sorgt dafür, dass die Druckbilder längs der Zeitung (Broadsheet) korrekt platziert sind. Die Sollwerte werden aus den Bilddaten erzeugt, oder durch das vorausgehende, manuelle Stellen der Register im Wendemdul (Haltefunktion). Als Stellglied wird ein Wendemodulregister verwendet, die Messung findet mit Schnittlagereglersensoren statt.
Stellglied: Register im Wendemodul.
Messung: Schnittlagreglersensoren in Fächer, Falzaufbau, Falz.
Voraussetzungen: Druckbild.

Der Bahnspannungsregler sorgt für einen konstanten Zug der Papierbahn oder Papierstränge im Fortdruck in Abhängigkeit von der Papierbahnbreite oder Papierstärke. Als Stellglied werden Wendemodulzugwalzen, das Vorspannwerk, oder die Trichterwalze verwendet. Die Messung findet mittels Zugmessdosen im Rollenwechsler, vor der Wendemodulzugwalze, oder beim Fächer statt.

Regler: Bahnspannung Bahn und Stränge
Stellglied: Vorspannwerk im Rollenwechsler, Zugwalzen im Wendemodul, Trichterwalze
Messung: Kraftaufnehmer im Rollenwechsler, Kraftaufnehmer im Wendemodul, eventuell
Kraftaufnehmer in den Fächern
Voraussetzungen: konstante Geschwindigkeit

Regler: Bahnspannung Bündel
Stellglied: Zugwalzen in Falzaufbau
Messung: Kraftaufnehmer in Falzaufbau

Der Farbdichteregler regelt die Farbsättigung der einzelnen Farben auf der Papierbahn. Der Sollwert dafür wird aus den Bilddaten generiert. Als Stellglied wird ein Farbmesser oder eine Pumpe verwendet. Die Messung findet mittels einer Farbdichtekamera statt.
Stellglied: Farbmesserschrauben, Pumpfarbwerk.
Messung: Farbdichtekamera.
Voraussetzungen: Druckbild.

Ein weiterer Regler ist für die Lage der Papierbahn bzw. korrekte Strangbreiten zuständig.
Stellglied: Tragarme im Rollenwechsler

Messung: ein Zeilensensor / Bahn eingangs Wendemodul möglichst nahe bei den Schneidmessern. Damit wird sichergestellt, dass die Bahn in korrektbreite Stränge geschnitten werden.
Voraussetzungen: korrekte Papierbreite, genaue Messerposition
Alternative Messung: ein Zeilensensor/Bahn im Rollenwechsler
Voraussetzungen: korrekte Papierbreite, genaue Messerposition, kein Bahnverlauf zwischen Sensor und Schneidmessern, vernachlässigbarer, bekannter Fanin zwischen Druckturm und Sensor.

Jeder Einzelregler sendet einen Status an einen übergeordneten Regler, welcher wiederum die Reglerstati und andere Maschinensignale oder EIN/AUS/HALTEN- und eventuell weitere Befehle an die verschiedenen betroffenen Einzelregler verschickt. Die Vorteile dieser Vorgehensweise sind: Zentrale Logik kennt alle relevanten Informationen; Einheitliche Behandlung und Schnittstelle aller Reglersysteme; Neue Systeme können einfacher integriert werden; Leichtere und bessere Erweiterbarkeit (neue Reglersysteme, zusätzliche Funktionen).

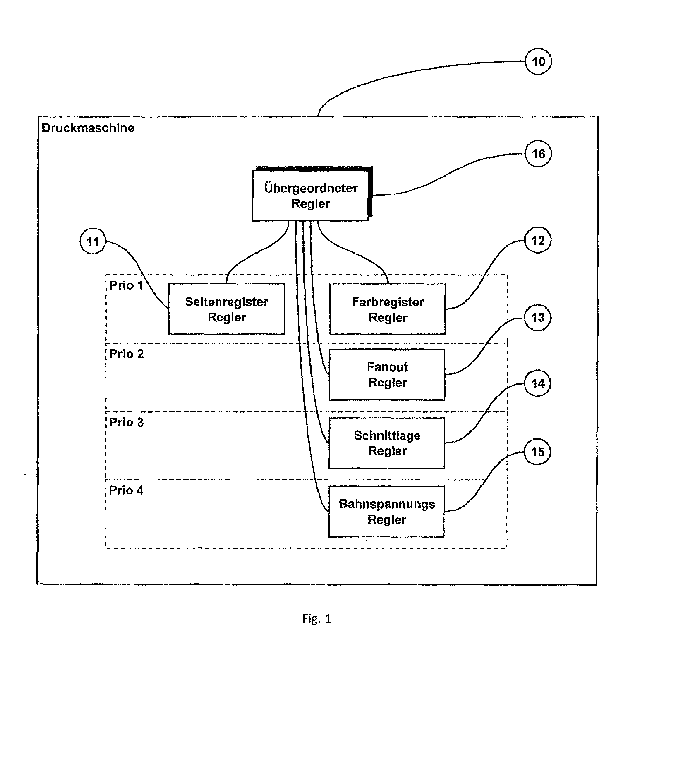

Die Figur 1 zeigt eine Zusammenstellung von Reglern für eine kooperative Regelung einer Druckmaschine 10. Die Druckmaschine 10 umfasst mehrere Einzelregler 11-15 zum Regeln mehrerer Einzelfunktionen der Druckmaschine. Die Einzelregler 11-15 umfassen einen Farbregisterregler 12, einen Seitenregisterregler 11, einen Fanoutregler 13, einen Schnittlageregler 14 und einen Bahnspannungsregler 15. Die Druckmaschine 10 wird mittels der Einzelregler 11-15 geregelt. Die Regelung des Bahnspannungsreglers 15 und/oder des Schnittlagereglers 14 und/oder des Fanoutreglers 13 wird durch einen übergeordneten Regler 16 beeinflusst oder zeitweise geändert, beispielsweise dadurch, dass die Regelung des Bahnspannungsreglers 15 und/oder des Schnittlagereglers 14 und/oder des Fanoutreglers 13 zeitweise unterbunden oder abgeschwächt, oder der Regelalgorithmus geändert wird, um die Regelung durch den Farbregisterregler 12 und/oder den Seitenregisterregler 11 zu vereinfachen oder zu verbessern.

Die Einzelregler 11-15 sind mit den Prioritäten Prio 1 bis Prio 4 priorisiert. Je weiter oben ein Einzelregler 11-15 eingezeichnet ist, desto höher ist seine Priorität. Damit sind im Ausführungsbeispiel der Farbregisterregler 12 und Seitenregisterregler 11 am höchsten und der Bahnspannungsregler 15 am niedrigsten priorisiert.

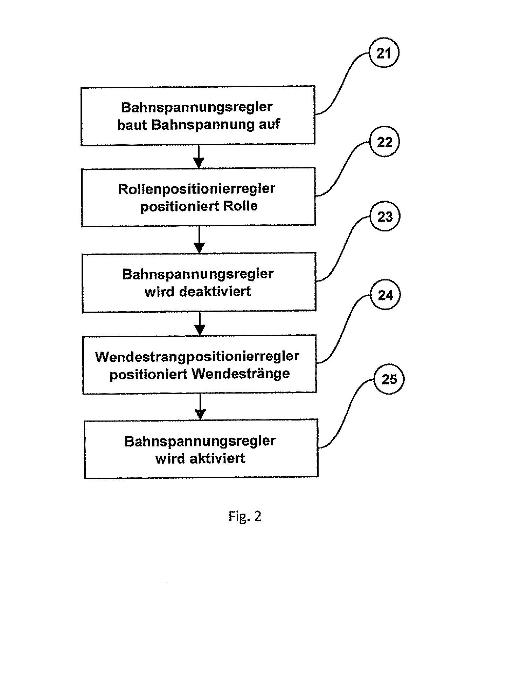

Die Figur 2 zeigt einen Ausschnitt aus einem Regelungsablauf beim Hochfahren der Druckmaschine 10. Als erstes baut der Bahnspannungsregler 15 die Bahnspannung auf (Schritt 21) und der Rollenpositionierregler positioniert die Rolle (Schritt 22). Um Behinderungen bei der Rollenpositionierung durch eine zu hohe Bahnspannung zu verhindern, wird daraufhin der Bahnspannungsregler 15 zugunsten des Wendestrangpositionierreglers deaktiviert (Schritt 23). Daraufhin positioniert der Wendestrangpositionierregler die Wendestränge (Schritt 24) und der Bahnspannungsregler 15 wird wieder aktiviert (Schritt 25).

Beispielsweise halten die Bahnkanten- und Strangkantenregler die Kante der Bahn/ des Strangs auf einem vorgegebenen Sollwert. Sind die Zugverhältnisse so schlecht, dass das Papier auf den Wendestangen unkontrolliert rutscht, wird der Strangkantenregler die Wendestangen korrigieren, ohne dass er dabei die Kante des Wendestranges am gewünschten Ort hält. Sobald die Zugverhältnisse wieder genügend sind, sollte der Strangkantenregler die durchgeführten Wendestangenkorrekturen wieder zurückregeln. Bemerkt die Bedienperson schlechte Zugverhältnisse, kann sie manuell die entsprechenden Kantenregler deaktivieren. Der übergeordnete Regler 16 würde erfindungsgemäß jedoch die schlechten Zugverhältnisse bemerken und die entsprechenden Kantenregler solange stillsetzen, bis der Bahnspannungsregler die schlechten Züge auskorrigiert hat.

Der übergeordnete Regler 16 steuert die Einzelregler so, dass die Bedienperson nach dem Einziehen der Bahnen vorzugsweise keine manuellen Eingriffe in die Hochlauf-, Fortdruck- oder Stillstands- Abläufe vornehmen muss. Der übergeordnete Regler 16 sorgt beim Hochlauf dafür, dass mit möglichst wenig Makulatur ein schön bedrucktes, sauber gefaltetes Exemplar entsteht. Dabei werden zuerst die Stränge und Bahnen ausgerichtet, so dass ein exakt gefaltetes Exemplar entsteht. Nun wird die Maschine hochgefahren, Druck angestellt, Einzelregler, welche für ein passerstimmiges Druckbild sorgen und der Farbdichteregler aktiviert, und der Schnittlageregler eingeschaltet. Bei Bedarf kann die Bedienperson jederzeit manuell in die Prozesse eingreifen, einzelne Regelstrecken desaktivieren, gesamte Reglersysteme ausschalten, oder die Maschine manuell hoch- oder runter fahren. Die Koordinierung der Einzelregler kann auch iterative Vorgänge beinhalten.

Der hohe Vernetzungsgrad der Einzelregler untereinander und mit der Maschine führt dazu, dass die Bedienperson möglichst wenig manuell in den Druckprozess eingreifen muss. Der Bedienungsaufwand wird somit minimiert. Die Bedienperson muss nicht mehr alle Zusammenhänge der Einzelregler und Stellglieder sowie die gegenseitigen Beeinflussungen kennen.

Die Einzelregler nehmen nur sinnvolle Korrekturen vor. Würde ein Einzelregler aufgrund einer negativen Beeinflussung eines höher priorisierten Einzelreglers einen Fehler korrigieren, den er nach Beenden der höher priorisierten Verstellung wieder zurück korrigieren müsste, wird die Verstellung nur durchgeführt, wenn so die Gesamtqualität des Produktes steigt.

Die Einzelregler werden so priorisiert, dass möglichst wenig Makulatur entsteht. Die Koordination der Einzelregler untereinander ist soweit gelöst, dass die Bedienperson, nachdem alle Bahnen eingezogen sind, nur die Freigabe zum Drucken geben muss. Daraufhin fährt die Maschine automatisch hoch. Die Einzelregler werden automatisch aktiviert und deaktiviert. Im Normalbetrieb sind durch die Bedienperson keine manuellen Verstellungen mehr vorzunehmen.

Einzelregler, welche das Druckbild direkt beeinflussen, müssen höher gewichtet werden. Farbregister- und Seitenregisterregler erhalten somit die höchste Priorität. Fanout- und Farbdiehteregler die zweit höchste und so weiter.

Der Schnittlageregler und der Bahnspannungsregler funktionieren weitgehend unabhängig von den anderen Regelvorgängen. Die beiden Einzelregler werden sich jedoch gegenseitig beeinflussen: Würde der Bahnspannungsregler auch in den Rampen für einigermaßen stabile Züge sorgen, müsste der Schnittlageregler weniger korrigieren. Die Stranglängenänderungen, welche der Schnittlageregler erzeugt, verschlechtern die Zugverhältnisse der Stränge.

Der Farbdichteregler funktioniert autonom und beeinflusst andere Einzelregler nicht direkt.

Folgende Einzelregler weisen eine höchste Priorität auf: Farbregisterregler, Schön-/ WiderDruckregler, Seitenregisterregler.

Folgende Einzelregler weisen eine zweit höchste Priorität auf: Fanoutregler, Regler für die Lage der Papierbahn.

Folgende Einzelregler weisen eine dritt höchste Priorität auf: Regler der Lage der Wendestränge, Schnittlageregler, Regler der Bahnspannung (Bahn und Stränge, sowie Bündel), Farbdichteregler.

Während der Laufzeit der Druckmaschine 10 können sich die Prioritäten der Einzelregler dynamisch ändern. Dadurch kann ein erster Einzelregler mit einer Priorität, die zu Beginn der Laufzeit niedriger als die Priorität eines zweiten Einzelreglers ist, während der Laufzeit eine Priorität zugewiesen bekommen, die höher als die Priorität des zweiten Einzelreglers ist. Alle Einzelregler kommunizieren mit dem übergeordneten Regler 16 über das Maschinennetzwerk. Der übergeordnete Regler 16 wertet die Zustände der Einzelregler und der Maschine aus. Der übergeordnete Regler 16 entscheidet aus den Daten, ob ein Einzelregler aktiviert oder deaktiviert, oder ob die Maschine oder ob eine oder mehrere Maschinenkomponenten langsamer oder schneller betrieben werden sollen.

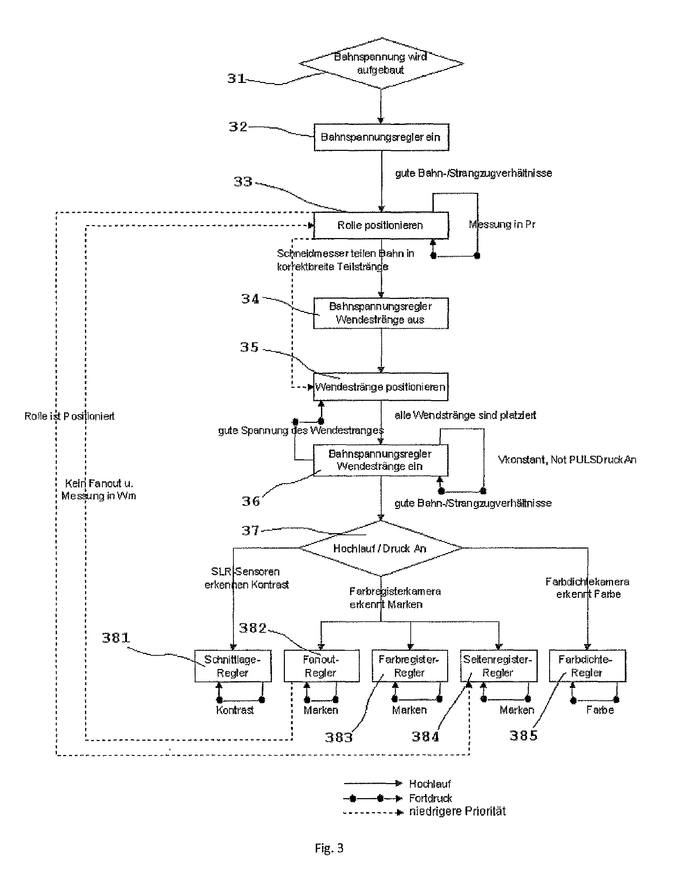

Die Figur 3 zeigt mögliche Vorgänge, welche der übergeordnete Regler 16 koordinieren oder priorisieren kann, beispielsweise kann das ein Ablauf der Koordination der Einzelregler während des Hochlaufs sein. Gestrichelte Linien stellen Signalpfade dar, wobei die Signale mit geringerer Priorität behandelt werden oder gegebenenfalls nicht gebraucht werden. Sobald die Bahnspannung aufgebaut wird (Schritt 31), sorgt der Bahnspannungsregler für konstante, gute Bahnspannungsverhältnisse (Schritt 32). Anschließend werden die Papierbahnen bzw. Stränge positioniert. Um auf einer korrekt und genau aufgestellten Maschine ein genau gefaltetes und sauber bedrucktes Produkt zu erzeugen, kann zuerst die Aufteilung der Bahnen in Stränge und für die genaue Falzung deren Ausrichtung auf die Trichter gestellt werden.

Die Rolle wird auf dem Rollenwechsler dazu solange seitlich verstellt (Schritt 33), bis die Bahn durch die Schneidmesser im Wendestangenmodul in genau richtig breite Stränge aufgeteilt wird. Anschließend werden die korrektbreiten Wendestränge in ihrer seitlichen Lage solange mittels ihrer Wendestangen verschoben (Schritt 35), bis sie genau auf den Geradeaussträngen zu liegen kommen. Es entsteht damit ein exakt gefaltetes unbedrucktes Exemplar, das an einem dem Rücken gegenüberliegenden Ende stimmig ausgerichtete Papierkanten zeigt.

Im Schritt 37 fährt die Maschine hoch. Der Druck wird angestellt. Durch die seitliche Verstellung der Plattenzylinder (Schritt 384) wird das Druckbild auf die Stränge eingemittet. Gleichzeitig sorgt der Farbregisterregler dafür, dass die einzelnen Farben in Laufrichtung exakt aufeinander liegen (Schritt 385).

In einem zweiten Schritt zum Platzieren des Druckbildes kann der Fanoutregler den Fanout zwischen den Druckstellen korrigieren (Schritt 382).

Mit dem Einsetzen des Druckes wird auch der Schnittlageregler aktiv (Schritt 381). Dieser korrigiert die unterschiedlichen Bahn-/Strang- und Bündellängen zwischen der letzten Druckstelle und dem Falzmesser.

Das Stillsetzen der Maschine geschieht in umgekehrter Reihenfolge. Während des Fortdrucks priorisiert der übergeordnete Regler 16 die einzelnen Regelstrecken so, dass ungewollte Verstellungen, wie oben beschrieben, vermieden werden. Die manuellen Verstellungen durch eine Bedienperson während des Druckprozesses werden von Reglersystemen übernommen.

Da das Bedrucken der Papierbahn diese in seiner Breite, Lage und Länge wiederum verändert, kann der Vorgang iterativ durchgeführt werden.

Der übergeordnete Regler 6 übernimmt die Aufgabe, durch das Priorisieren der Vorgehensschritte die einzelnen Stellglieder und Reglersysteme untereinander so zu koordinieren, dass dies nicht mehr durch die Bedienperson gemacht werden muss.

Während des Fortdrucks sollten sich die Einzelregler praktisch nicht beeinflussen.

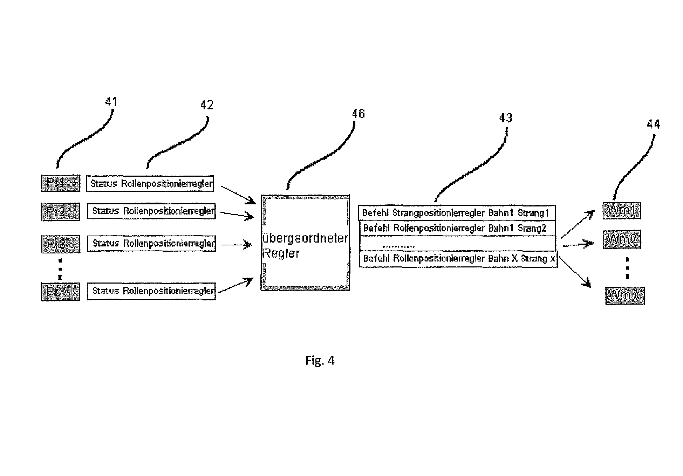

Die Figur 4 zeigt die Kommunikation zwischen einem Rollenpositionierregler (Rollenpositioniermessung in Rollenwechsler) und einem Wendestrangpositionierregler.

Befindet sich der Rollenpositioniersensor im Wendemodul und misst der Fanoutregler einen zu großen Fanin, wird der Rollenpositioniersensor diesen Fanineffekt ebenfalls messen. Die Rollenpositionierung sollte somit solange unterbunden werden, bis der Fanin ein normales Ausmaß annimmt, oder der Fanin kann bei der Berechnung des Rollenpositioner-Reglersollwerts verrechnet oder berücksichtigt werden. Die Rollenpositionierregler mit entsprechenden Rollenpositioniersensoren 41 senden somit jeweils eine Nachricht betreffend einen Status 42 eines Rollenpositioniersensors 41 an den übergeordneten Regler 46. Der übergeordnete Regler 46 sendet daraufhin jeweils einen Befehl 43 zur Positionierung eines Strangs bezüglich einer Bahn an jeweils ein Wendemodul 44.

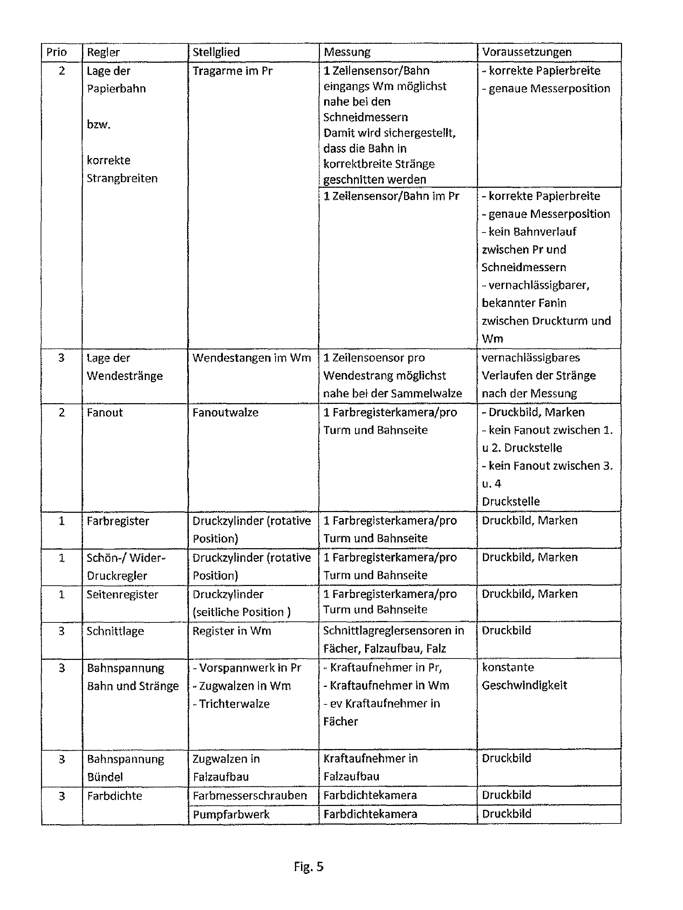

Figur 5 zeigt ein Ausführungsbeispiel einer Zusammenstellung der Regler, der Stellglieder, Messungen, Voraussetzungen und Prioritäten der Regler für eine Druckmaschine.

### Bezugszeichenliste

- 10: Druckmaschine
- 11: Seitenregisterregler
- 12: Farbregisterregler
- 13: Fanoutregler
- 14: Schnittlageregler
- 15: Bahnspannungsregler
- 16: übergeordneter Regler
- 21: Bahnspannungsregler baut Bahnspannung auf
- 22: Rollenpositionierregler positioniert Rolle
- 23: Bahnspannungsregler wird deaktiviert
- 24: Wendestrangpositionierregler positioniert Wendestränge
- 25: Bahnspannungsregler wird aktiviert
- 31: Bahnspannung wird aufgebaut
- 32: Bahnspannungsregler ein
- 33: Rolle positionieren
- 34: Bahnspannungsregler Wendestränge aus
- 35: Wendestränge positionieren
- 36: Bahnspannungsregler Wendestränge ein
- 3 7: Hochlauf / Druck an
- 381: Schnittlageregler
- 382: Fanoutregler
- 383: Farbregisterregler
- 384: Seitenregisterregler
- 385: Farbdichteregler
- 41: Rollenpositioniersensor
- 42: Status Rollenpositionierregler
- 43: Befehl Strangpositionierregler
- 44: Wendemodul
- 46: übergeordneter Regler

## Patentansprüche

1. Verfahren zum Regeln oder Steuern einer Maschine, insbesondere einer Druckmaschine (10), mit mindestens zwei Einzelreglern (11-15) zum Regeln einer oder mehrerer Einzelfunktionen der Maschine, beispielsweise Farbregisterregler (12), Seitenregisterregler (11) oder Fanoutregler (13), wobei
- die Maschine mittels der mindestens zwei Einzelregler (11-15) geregelt oder gesteuert wird, und
- eine Regelung von zumindest einem ersten Einzelregler (13-15) durch einen übergeordneten Regler (16) beeinflusst oder zeitweise geändert wird, beispielsweise **dadurch**, dass die Regelung des zumindest einen Einzelreglers (13-15) zeitweise unterbunden oder abgeschwächt, oder der Regelalgorithmus geändert wird, um die Regelung durch einen anderen, zweiten Einzelregler (11-12) zu vereinfachen oder zu verbessern.

2. Verfahren nach einem der vorhergehenden Ansprüche, wobei zumindest eine erste Regelgröße des zumindest einen ersten Einzelreglers (13-15) von einer zweiten Regelgröße des anderen, zweiten Einzelreglers (11-12) verschieden ist.

3. Verfahren nach einem der vorhergehenden Ansprüche, wobei
- einem ersten Einzelregler (13-15) eine erste Priorität zugeordnet wird, welche niedriger als eine zweite, einem zweiten Einzelregler (11-12) zugeordnete, Priorität ist; und
- beim Hochfahren und/oder Herunterfahren und/oder bei einer eingetretenen oder vorherbestimmbaren Verschlechterung der Gesamtfunktion der Maschine (10), beispielsweise einer Verschlechterung eines Druckbildes oder einer Erhöhung einer von der Maschine (10) erzeugten Makulatur, eine Regelung des ersten Einzelreglers (13-15) zeitweise geändert, beispielsweise unterbunden oder abgeschwächt, wird, um die Regelung der von dem zweiten Einzelregler (11-12) geregelten Regelgröße zu vereinfachen oder zu verbessern.

4. Verfahren nach einem der vorhergehenden Ansprüche, wobei
- die Maschine (10) mittels einer Mehrzahl von Einzelreglern (11-15), beispielsweise mindestens 5, mindestens 10, oder mindestens 30 Einzelregler (11-15) gesteuert wird; und
- jedem Einzelregler (11-15) eine Priorität zugeordnet wird, welche in Bezug auf eine Priorität, die einem anderen Einzelregler (11-15) zugewiesen wurde, gleich oder verschieden ist.

5. Verfahren nach einem der vorhergehenden Ansprüche, wobei die Regelung des ersten Einzelreglers (13-15) derart geändert wird, dass
- die Regelung des ersten Einzelreglers (13-15), dessen Priorität niedriger als die Priorität des zweiten Einzelreglers (11-12) ist, zugunsten der Regelung des zweiten Einzelreglers (11-12) zurückgestellt wird, und/oder
- einer Führungsgröße des ersten Einzelreglers (13-15) ein unscharfer Sollwert oder ein Sollwertbereich oder ein unscharfer Sollwertbereich zugewiesen wird, und/oder
- dem ersten Einzelregler (13-15) ein verzögertes Regelverhalten zugewiesen wird.

6. Verfahren nach einem der vorhergehenden Ansprüche, wobei folgende Schritte ausgeführt werden:
a) die Gesamtfunktion der Maschine (10) wird darauf geprüft, ob eine Verschlechterung der Gesamtfunktion, insbesondere beim Hoch und/oder Herunterfahren der Maschine (10), vorliegt;
b) beim Feststellen einer Verschlechterung der Gesamtfunktion der Maschine (10) wird die Regelung des oder der Einzelregler (14-15) mit der niedrigsten Priorität über einen vorgegebenen Zeitraum geändert, beispielsweise unterbunden oder abgeschwächt, und die Gesamtfunktion der Maschine (10) nach Ablauf des vorgegebenen Zeitraums geprüft;
c) falls eine Verbesserung der Gesamtfunktion der Maschine (10) nicht festgestellt wird, wird mindestens ein weiterer Einzelregler (13) mit nächsthöherer Priorität über den vorgegebenen Zeitraum zusätzlich geändert, beispielsweise unterbunden oder abgeschwächt, und der Schritt c) wird erneut ausgeführt.

7. Verfahren nach einem der vorhergehenden Ansprüche, wobei
- eine Priorität statisch oder dynamisch einem Einzelregler (11-15) zugeordnet wird, und/oder
- ein Einzelregler (11-12) mit höherer Priorität, insbesondere beim Hochfahren der Maschine (10), vor einem Einzelregler (11-15) mit niedrigerer Priorität aktiviert wird, und/oder
- ein Einzelregler (13-15) mit niedrigerer Priorität, insbesondere beim Herunterfahren der Maschine (10), vor einem Einzelregler (11-12) mit höherer Priorität deaktiviert wird.

8. Verfahren nach dem vorhergehenden Anspruch, wobei die Regelung eines Schnittlagereglers oder eines Bahnspannungsreglers beeinflusst oder zeitweise geändert, beispielsweise unterbunden oder abgeschwächt, wird, um die Regelung durch einen Farbregisterregler oder Seitenregisterregler zu vereinfachen oder zu verbessern.

9. Verfahren nach einem der vorhergehenden Ansprüche, wobei einem Bahnspannungsregler eine niedrigere Priorität als einem Seitenregisterregler zugewiesen wird, insbesondere beim Hochfahren der Maschine (10).

10. Verfahren nach einem der vorhergehenden Ansprüche, wobei
- einem Rollenpositionierregler eine niedrigere Priorität als einem Fanoutregler zugewiesen wird;
- eine Rollenpositionierung durch den Rollenpositionierregler verzögert, abgeschwächt oder unterbunden wird, falls ein Fanoutsensor des Fanoutreglers einen Fanout außerhalb eines vorgegebenen Wertebereichs misst oder ein Fanoutfehler im Rollenpositionierregler berücksichtigt wird; und
- die Rollenpositionierung durch den Rollenpositionierregler durchgeführt wird, falls der Fanout einen Wert innerhalb des vorgegebenen Wertebereichs aufweist.

11. Verfahren nach einem der vorhergehenden Ansprüche, wobei
- einem Bahnspannungsregler eine niedrigere Priorität als einem Schnittlageregler zugewiesen wird;
- eine Bahnspannung reduziert oder eine Regelung der Bahnspannung deaktiviert wird, indem eine Änderung des Zugs auf eine Papierbahn oder einen Papierstrang durch den Bahnspannungsregler unterbunden wird, falls ein Schnittlagereglersensor eine Abweichung einer Ist-Druckbildplatzierung von einer Soll- Druckbildplatzierung außerhalb eines vorgegebenen Wertebereichs misst, und
- die Regelung der Bahnspannung durch den Bahnspannungsregler aktiviert wird, falls die Abweichung der Ist-Druckbildplatzierung von der Soll- Druckbildplatzierung einen Wert innerhalb des zulässigen Wertebereichs aufweist.

12. Verfahren nach einem der vorhergehenden Ansprüche, wobei
- einem Schön-/Widerdruckregler eine niedrigere Priorität als einem Farbregisterregler zugewiesen wird;
- eine Regelung der Positionierung von Druckbildern der Schön- und Widerdruckseite zueinander durch den Schön-/Widerdruckregler unterbunden, abgeschwächt, oder verzögert wird, falls ein Sensor des Farbregisterreglers, beispielsweise eine Farbregisterkamera, Positionen einzelner Farben relativ zueinander oder zur Bahn außerhalb eines vorgegebenen Wertebereichs misst, und
- die Positionierung von Druckbildern der Schön- und Widerdruckseite zueinander durch den Schön-/Widerdruckregler durchgeführt wird, falls die Positionen der einzelnen Farben relativ zueinander oder zur Bahn Werte innerhalb des zulässigen Wertebereichs aufweisen.

13. Verfahren nach einem der vorhergehenden Ansprüche, wobei
- der übergeordnete Regler (16) an jeweils einen Einzelregler (11-15), als Ausgangsgrößen des übergeordneten Reglers (16), mindestens eine Regelgröße und/oder mindestens eine Führungsgröße zuführt;
- jeweils ein Einzelregler (11-15) mindestens eine Stellgröße an mindestens ein dazugehörendes Stellglied und/oder an den übergeordneten Regler (16), als Eingangsgröße des übergeordneten Reglers (16), zuführt; und
- der übergeordnete Regler (16) ein neuronales Netz umfasst, mittels welchem die Eingangsgrößen und Ausgangsgrößen des übergeordneten Reglers (16) zum Regeln und/oder Verbessern einer Gesamtfunktion der Maschine (10) übertragen werden.

14. System zum Regeln oder Steuern einer Maschine, insbesondere Druckmaschine (10), mit
- mindestens zwei jeweils zum Regeln einer oder mehrerer Einzelfunktionen der Maschine ausgebildeten Einzelreglern (11-15), und
- einem mit den Einzelreglern (11-15), vorzugsweise mittelbar oder unmittelbar, gekoppelten, zum Regeln der Maschine ausgebildeten übergeordneten Regler oder Gesamtregler (16), wobei
- eine Regelung oder ein Regelverhalten von zumindest einem Einzelregler (13-15) zumindest zeitweise durch den Gesamtregler (16) geändert werden kann.

15. System nach dem vorhergehenden Anspruch, wobei
- die Regelung eines jeden Einzelreglers (11-15) durch den Gesamtregler (16) abgeschwächt oder deaktiviert werden kann, und/oder
- die Regelung jedes Einzelreglers (11-15) durch den Gesamtregler (16) wieder aktiviert werden kann.
